# EUROPEAN PATENT SPECIFICATION

(11) **EP 1 512 596 B1**
(45) Date of publication and mention of the grant of the patent: **28.12.2011**
(21) Application number: 03702656.4
(22) Date of filing: 15.01.2003
(51) Int. Cl.: B60T 7/06

(54) **VEHICLE WITH A PEDAL SUPPORT STRUCTURE COMPRISING AN ANTI-COLLISION SAFETY MECHANISM**
FAHRZEUG MIT EINER PEDALSTÜTZKONSTRUKTION MIT KOLLISIONSSCHUTZMECHANISMUS
VEHICULE AVEC UNE STRUCTURE DE SUPPORT DE PEDALES POURVUES D'UN MECANISME DE SECURITE ANTI-COLLISION

(30) Priority: 23.01.2002 ES 200200134
(43) Date of publication of application: 09.03.2005
(73) Proprietor: Batz, S.Coop., 48140 Igorre (Bizkaia) (ES)
(72) Inventor: PALACIO ARGÜELLES, Joseba, E-48980 Santurtzi (ES); BURGUERA ALBIZURI, Fernando, E-48140 Bilbao (ES); NAREWSKI, Krzyztof, B., E-48100 Laukariz (ES)
(74) Representative: Fernandez Guzman, Juan
(86) International application number: PCT/ES2003/000016
(87) International publication number: WO 2003/062029

(56) References cited:
- EP-A1- 0 827 885
- EP-A1- 1 065 114
- EP-A2- 1 106 459
- US-A- 6 089 119

## Description

### TECHNICAL FIELD

The present invention relates to vehicles with pedal support structures and more specifically to vehicles with pedal support structures comprising anti-collision safety mechanisms.

### PRIOR ART

Pedals for vehicles with diverse safety mechanisms activated only in the event of a head-on collision are already known. These mechanisms must safeguard the integrity of the lower extremities of the driver of the vehicle. In order to achieve this, in the event of a collision the pedal must be prevented from moving towards the driver at a magnitude or a speed that is dangerous.

In a potentially harmful head-on collision with regard to pedals, the wall to which the pedals are joined is deformed thus pushing the pedal support structure and the pedals themselves against the driver. In such a situation the safety mechanism must be activated to prevent the pedals impacting against the lower extremities of the driver.

Pedal structures exist wherein the mechanism is activated when sudden deceleration caused by the impact is detected. Said deceleration causes certain parts to break directly as a result of the inertia generated or is measured by electronic elements that activate the controlled breakage of certain parts.

Other pedal structures are based on the distance between the wall where the pedals are secured and an element in the vehicle considered to be deformation-resistant in the accident. In the event of a head-on collision said wall is moved, thus reducing the distance between the wall and the deformation-resistant element. In such cases a mechanism is activated that prevents the pedals from transmitting the energy of the impact. There are various means of achieving this such as breaking the shaft of the pedal, breaking the drive rod to the servo-brake or forcing the pedal to make a negative movement.

EP 1110791 A2 describes a safety mechanism in pedals based on a unit comprising parts that are fitted together and positioned between the deformation-resistant transverse element in the passenger compartment and the wall separating the compartment from the engine. The mechanism includes an intermediate device that forces the pedal to move backwards when said wall moves towards the transverse element.

EP 1065114 A1 discloses a vehicle with a pedal support structure according to the preamble of claim 1, said vehicle comprising a passenger compartment, a wall disposed in the front part of said passenger compartment and a deformation-resistant transverse element, the support structure comprising a support part joined to said wall, an intermediate safety device connected to said support part, and a pedal which rotates around a shaft, the shaft being joined to the intermediate device. The pedal support structure also comprises a lock plate engaged to the intermediate device, said lock plate being fastened to the deformation-resistant transverse element. In the event of a head-on collision, the lock plate relatively moves with respect to the intermediate device so that said lock plate and said intermediate device are disengaged, moving the shaft of the pedal towards the passenger compartment.

EP 0827 885 A1 also describes a vehicle with a pedal support structure according to the preamble of claim 1, comprising an intermediate safety device. The pedal support structure comprises a hook member pivotally mounted to the steering column, the intermediate device being hooked to said hook member. In the event of a head-on collision, the intermediate device is released from the hook member and is free to rotate, moving the shaft of the pedal towards the passenger compartment.

### DISCLOSURE OF THE INVENTION

The object of the invention is to provide a vehicle with a pedal support structure that comprises a safety mechanism preventing the pedals from injuring the lower extremities of the driver in the event of a head-on collision, with the result that some of the characteristics of pedal support structures in the prior art are improved upon.

This object is achieved by a vehicle with a pedal support structure according to claim 1.

The deformation-resistant element of such a vehicle usually forms part of the deformation-resistant structure that these vehicles have in order to protect the vehicle's passengers in the event of an accident.

According to the invention, the movement of the shaft of the pedal towards the compartment, and, therefore, towards the driver, forces the pedal to tilt towards the compartment wall, forcing the shoe on said pedal away from the driver's legs.

### DESCRIPTION OF THE DRAWINGS

FIGURE 1 is a view in perspective of a first embodiment of the invention.
FIGURE 2 is a view in profile of the embodiment in FIGURE 1.
FIGURE 3 is a view in profile of the embodiment in FIGURE 1 which shows the arrangement of the various elements in the structure following a head-on collision.
FIGURE 4 is a view in profile of a second embodiment of the invention.
FIGURE 5 is a view in profile of a third embodiment of the invention.
FIGURE 6 is a view in profile of the embodiment in FIGURE 5 which shows the arrangement of the various elements in the inventive structure following a head-on collision.
FIGURE 7 is a view in profile of the intermediate safety device in the embodiment in FIGURE 5.
FIGURE 8 is a view in profile of the intermediate safety device in a fourth embodiment.

### DETAILED DESCRIPTION OF THE INVENTION

With reference to the figures, the vehicle with a pedal support structure of the invention comprises a compartment, a wall 2, which is disposed in the front part of the compartment, and a deformation-resistant transverse element 9. The pedal support structure comprises a support part 1 which is joined to the above-mentioned wall 2, an intermediate safety device 3 which is connected to said support part 1 and at least one pedal 6 which rotates around a shaft 7.

The pedal 6 comprises a shoe 11 and is connected to the corresponding actuator by a rod 10. Said actuator will be the servo-brake if the pedal is a brake pedal, and it will be the clutch cylinder if the pedal is a clutch pedal. The accelerator pedal is not believed to present a risk and it is not necessary, therefore, to implement a safety system for that pedal.

The shaft 7 of the pedal 6 is connected to the intermediate device 3 and, in the event of a head-on collision, said intermediate device 3 moves the shaft 7 towards the compartment under the force of the deformation-resistant transverse element 9 on said intermediate device 3.

The inventive pedal support structure comprises breakable elements that immobilise the intermediate device 3 in relation to the support part 1. These elements break in the event of a head-on collision allowing the intermediate device 3 to move in relation to the support part 1, with the shaft 7 of the pedal 6 moving towards the compartment as a result.

The intermediate device 3 comprises an extension 8 which faces the deformation-resistant transverse element 9, with said deformation-resistant transverse element 9 stopping the advance of said extension 8 in the event of a head-on collision and thus causing the intermediate device 3 to move in relation to the support part 1.

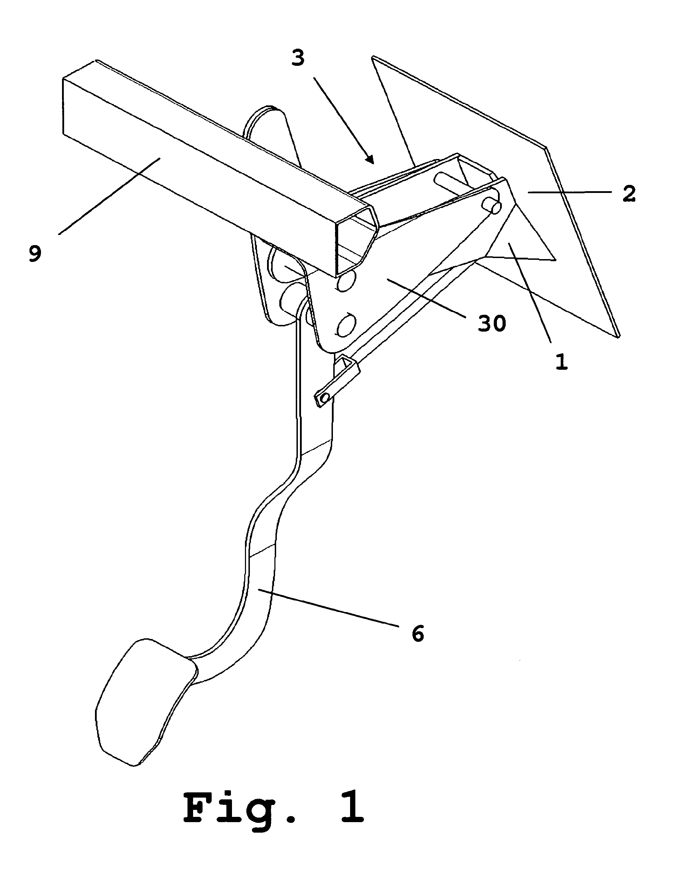

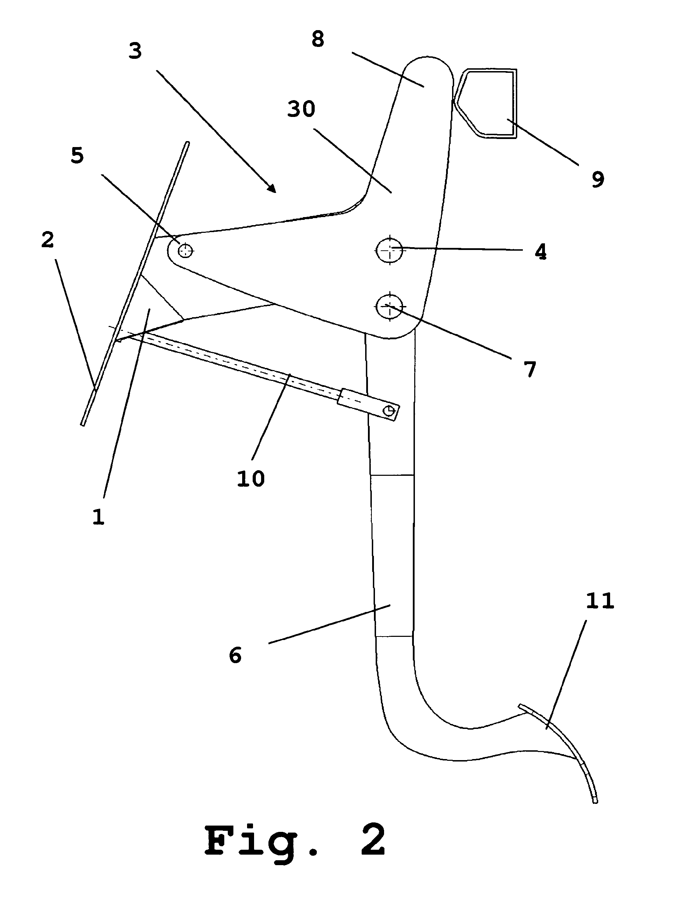

With reference to figures 1 to 3, the intermediate device 3 comprises a rocker 30 which includes the extension 8. The rocker 30 is joined to the support part 1 by a rotating transverse connection 4. As shown in figures 1 to 3, the breakable elements comprise a fixed connection 5 between the rocker 30 and the support part 1. Instead of the fixed connection 5, said breakable elements may comprise a wall connected to support part 1 that secures said rocker 30.

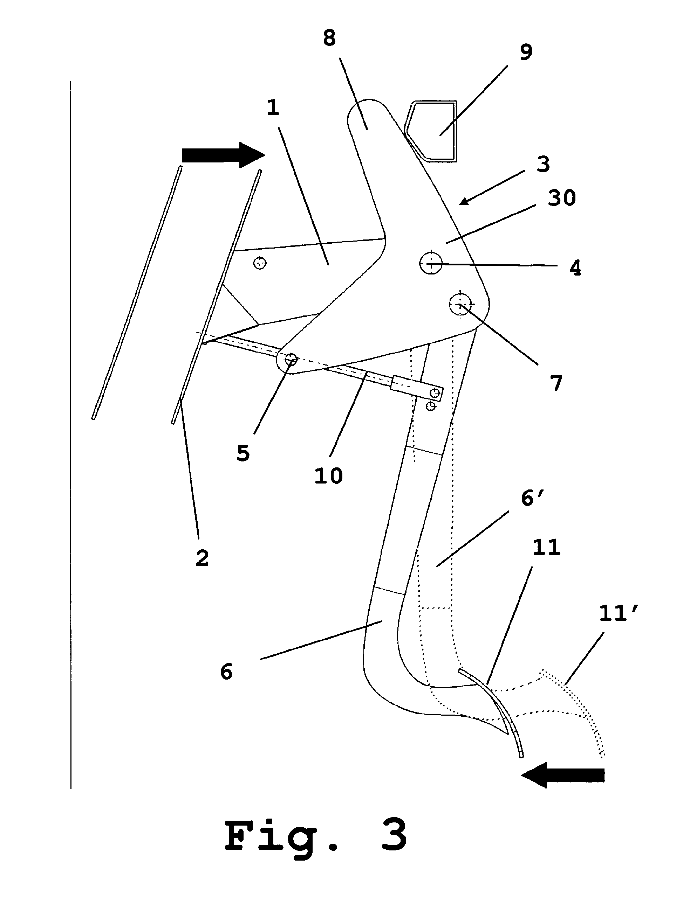

With reference to figure 3, in the event of a head-on collision the wall 2 moves towards the compartment, and together with the wall 2 the entire pedal support structure 6. Given that the deformation-resistant transverse element 9 remains in its original position, said deformation-resistant transverse element 9 stops the advance of the extension 8 on the rocker 3, thus forcing the fixed connection 5 to break and the rocker 3 to rotate around the rotating connection 4. Consequently, the shaft 7 of the pedal 6 moves towards the compartment, preventing the shoe 11 on said pedal 6 from advancing towards said compartment, and, therefore, towards the driver.

The proportion in which the pedal 6 moves away from the driver as the wall 2 advances is determined on the one hand by the distance between the shaft 7 of the pedal 6 and the rotating connection 4, and on the other by the distance between said rotating connection 4 and the point of contact between the rocker 3 and the deformation-resistant transverse element 9.

With reference to figure 3, in this embodiment the shaft 7 of the pedal 6 advances towards the driver in greater magnitude than the connection point between the pedal 6 and the rod 10, causing the shoe 11 on the pedal 6 to effectively move back. In a specific version of the invention, the effective movement of the shoe 11 during the collision can be reduced in relation to its initial position so that it remains virtually immobile.

If the inventive safety mechanism did not exist, we would have a pedal 6' with a shoe 11' (shown in sections) in a position in which they could injure the lower extremities of the driver.

In this first embodiment of the invention, in the event of the shoe 11 on the pedal 6 being pressed after the safety mechanism has been activated, said pedal 6 would move down without any effect whatsoever, as the extension 8 on the intermediate device 3 would separate from the deformation-resistant transverse element 9. Under no circumstances could the pedal 6 move beyond the point at which the extension 8 and the deformation-resistant transverse element 9 come into contact.

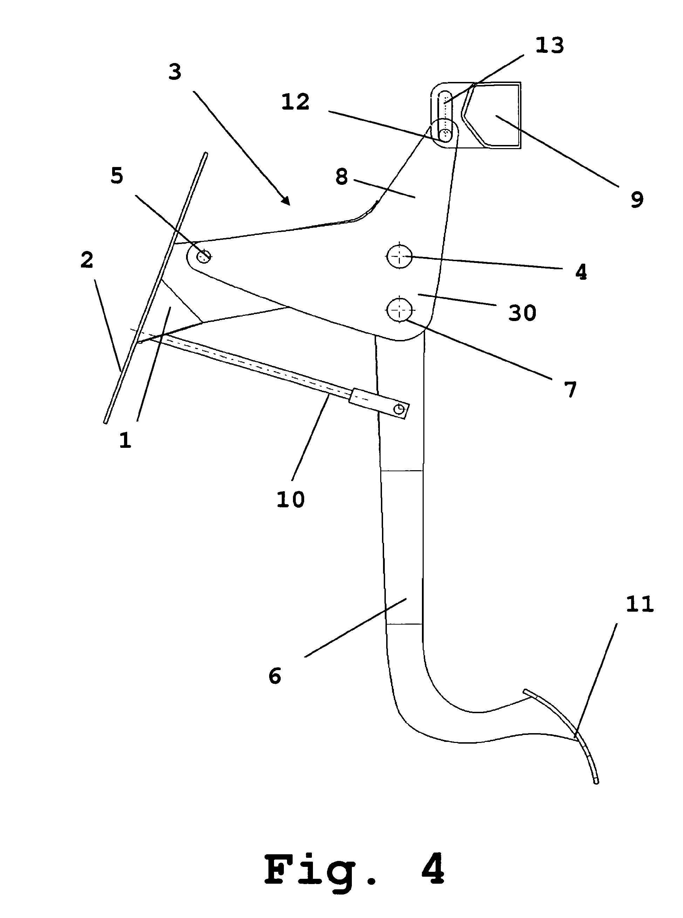

In a second embodiment, with reference to figure 4, the extension 8 on the rocker 3 comprises a pin 12, and the deformation-resistant transverse element 9 has a slot 13, with said pin 12 being housed in said slot 13.

The functioning of this second embodiment is the same as that of the above-mentioned first embodiment, with the exception that during the contact caused by the collision the pin 12 on the extension 8 on the intermediate device 3 would be forced to slide along the slot 13 on the element 9.

Furthermore, in the event of the shoe 11 on the pedal 6 being pressed following a head-on collision, said pedal 6 would not be able to move down freely as the slot 13 would prevent the extension 8 on the rocker 3 from becoming separated from the deformation-resistant transverse element 9. Even if severe deformations occur and the inventive safety mechanism is activated, the original function of the pedal 6 would not be lost, therefore, in any way, and would continue to act on the corresponding actuator (the servo-brake if the pedal is a brake pedal or the clutch cylinder if the pedal is the clutch pedal).

In other embodiments this combination of a pin 12 and a slot 13 can also be used.

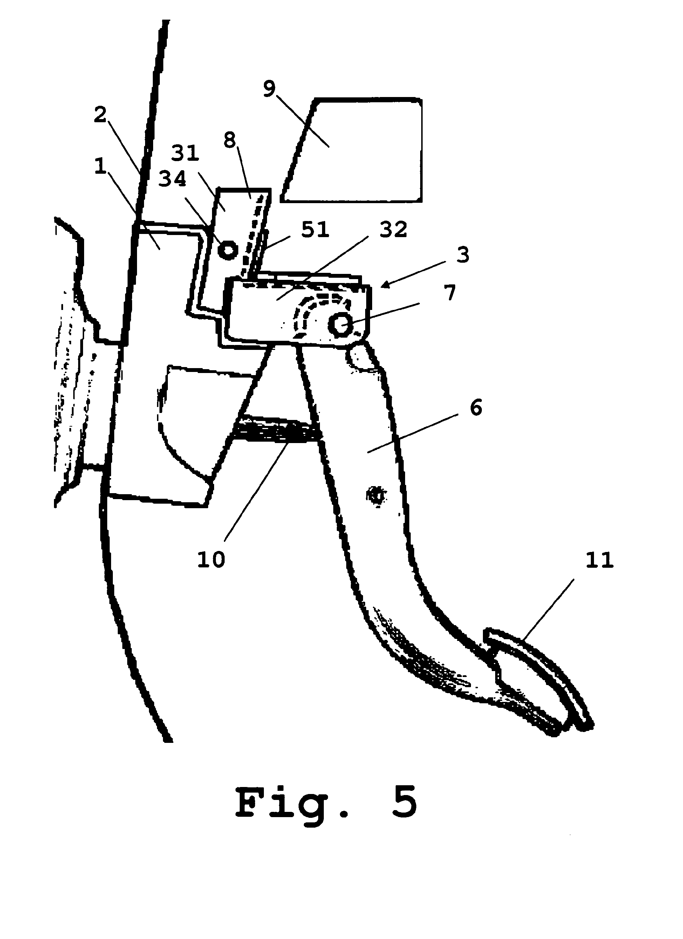

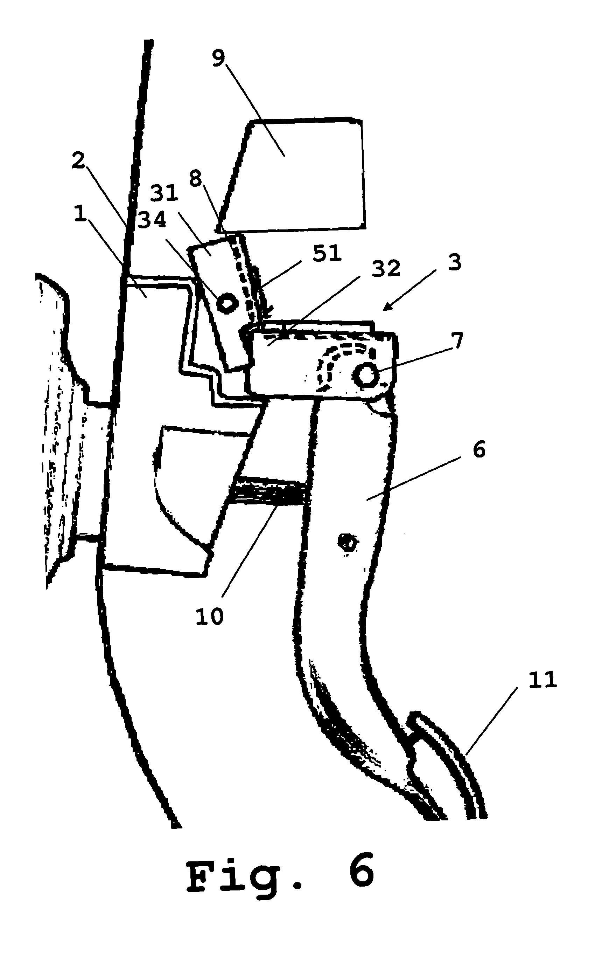

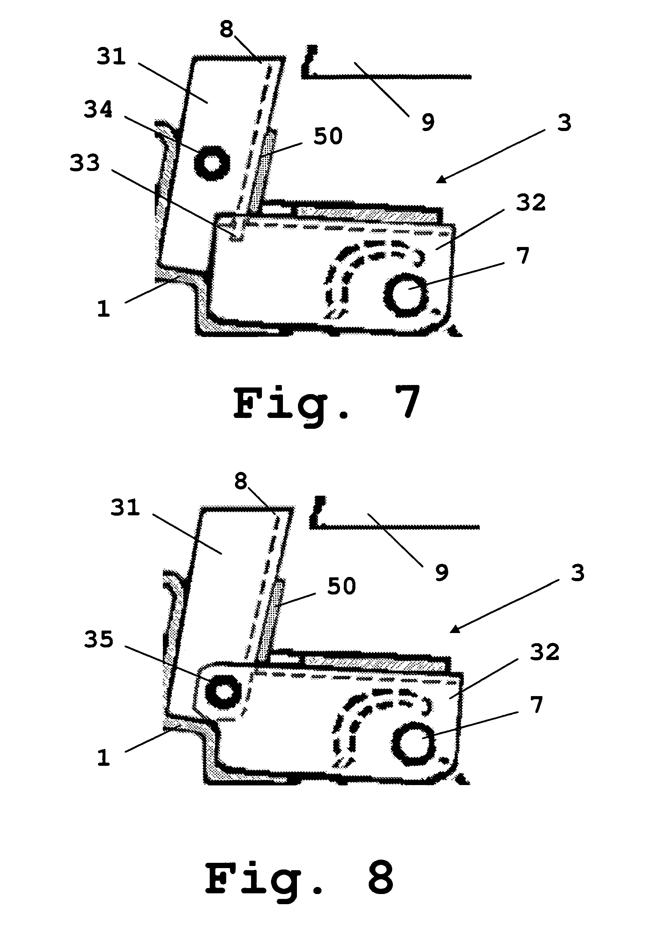

In a third embodiment, detailed in figures 5 and 6, the intermediate device 3 comprises a first part 31 that includes the extension 8 and a second part 32 to which the shaft 7 of the pedal 6 is connected. This second part 32 is in contact with said first part 31. With reference to figure 7, in this embodiment the first part 31 comprises a flange 33 that secures the second part 32, with said first part 31 joined to the support part 1 by a rotating transverse connection 34.

With reference to figure 6, in the event of a head-on collision the deformation-resistant transverse element 9 acts on the first part 31 and forces it to rotate in relation to the rotating connection 34. As a result, said first part 31 pushes the second part 32 towards the compartment, also moving the shaft 7.

In a fourth embodiment, the intermediate device of which is detailed in figure 8, the first part 31 and the second part 32 are connected by a rotating transverse connection 35. The operating mode is the same as in the embodiment described previously.

In these last two embodiments, embodiments third and fourth, in the event of a head-on collision the second part 32 can be guided so that it is moved in a mainly horizontal manner, as can be seen in figures 5 to 8. In addition, the breakable elements may comprise a wall 50 joined to the support part 1. In figures 5 to 8 said wall 50 secures the first part 31.

## Claims

1. Vehicle with a pedal support structure, vehicle, said vehicle comprising a passenger compartment, a wall (2) disposed in the front part of said passenger compartment and a deformation-resistant transverse element (9), the pedal support structure comprising a support part (1) joined to said wall (2), an intermediate safety device (3) connected to said support part (1), and at least one pedal (6) which rotates around a shaft (7), the shaft (7) being joined to the intermediate device (3) and, in the event of a head-on collision, said intermediate device (3) moving the shaft (7) towards the passenger compartment under the force of the deformation-resistant transverse element (9) on said intermediate device (3), **characterised in that** it comprises breakable elements (5; 50) that immobilise said intermediate device (3) in relation to the support part (1), and said intermediate device (3) comprises an extension (8) which faces the deformation-resistant transverse element (9), said deformation-resistant transverse element (9) stopping the advance of said extension (8) in the event of a head-on collision and thus causing the intermediate device (3) to be rotated in relation to the support part (1).

2. Vehicle according to claim 1, wherein said intermediate device (3) comprises a rocker (30) that includes the extension (8), said rocker (30) being joined to the support part (1) by a rotating transverse connection (4).

3. Vehicle according to claim 2, wherein said breakable elements comprise a fixed connection (5) between the rocker (30) and the support part (1).

4. Vehicle according to claim 2, wherein said breakable elements comprise a wall joined to the support part (1).

5. Vehicle according to claim 1, wherein said intermediate device (3) comprises a first part (31) that includes the extension (8) and a second part (32) to which the shaft (7) of the pedal (6) is connected, said second part (32) being in contact with said first part (31).

6. Vehicle according to claim 5, wherein said first part (31) comprises a flange (33) that secures the second part (32) with said first part (31) joined to the support part (1) by a rotating transverse connection (34).

7. Vehicle according to claim 5, wherein said first part (31) and said second part (32) are joined by a rotating transverse connection (35).

8. Vehicle according to any of claims 5 to 7, wherein in the event of a head-on collision the second part (32) is guided so that it is moved in a substantially horizontal manner.

9. Vehicle according to any of claims 5 to 8, wherein said breakable elements comprise a wall (50) joined to the support part (1).

10. Vehicle according to claim 9, wherein said wall (50) secures the first part (31).

11. Vehicle according to any of the preceding claims, wherein the extension (8) comprises a pin (12), and said deformation-resistant transverse element (9) comprises a slot (13), said pin (12) being housed in said slot (13).

## Patentansprüche

1. Fahrzeug mit einer Pedalstütze, das besagte Fahrzeug besteht aus einer Fahrgastzelle, einer Wand (2) im vorderen Teil der besagten Fahrgastzelle und einem deformationsgeschützten quer verlaufenden Element (9), wobei die Pedalstütze besteht aus einem Auflagebereich (1) an besagter Wand (2), einer dazwischen liegenden Sicherheitsvorrichtung (3), die mit der Auflage (1) verbunden ist und mindestens einem Pedal (6), das sich um eine Welle (7) dreht, wobei die Welle (7) ist mit der Zwischenvorrichtung (3) verbunden und bei einem frontalen Zusammenstoß bewegt die Zwischenvorrichtung (3) die Welle (7) unter der Wirkung des deformationsgeschützten Querelements (9) in Richtung der Fahrgastzelle an besagter Zwischenvorrichtung (3), **dadurch gekennzeichnet dass** sie zerbrechliche Teile (5;50) enthält, die diese Sicherheitsvorrichtung (3) in Bezug zur Auflage (1) stilllegen, und diese Zwischenvorrichtung (3) umfasst eine Erweiterung (8), die dem deformationsgeschützten quer verlaufenden Element (9) gegenüber liegt, wobei dieses deformationsgeschützte quer verlaufende Element (9) stoppt die Vorwärtsbewegung der besagten Erweiterung(8) bei einem Frontalzusammenstoß, so dass die Zwischenvorrichtung (3) zur Auflage (1) hin gedreht wird.

2. Fahrzeug nach Anspruch 1, wobei die besagte Zwischenvorrichtung (3) eine Wippe (30) umfasst, die die Erweiterung einschließt, und diese Wippe (30) ist über eine drehbare Querverbindung (4) mit der Auflage (1) verbunden.

3. Fahrzeug nach Anspruch 2, wobei besagte zerbrechliche Elemente aus einer festen Verbindung (5) zwischen der Wippe (30) und der Auflage (1) bestehen.

4. Fahrzeug nach Anspruch 2, wobei die zerbrechlichen Elemente eine Wand neben der Auflage umfassen (1).

5. Fahrzeug nach Anspruch 1, wobei diese Zwischenvorrichtung (3) einen ersten Teil (31) mit der Erweiterung (8) und einen zweiten Teil (32) umfasst, mit dem die Welle (7) des Pedals (6) verbunden ist, wobei dieser zweite Teil (32) hat Kontakt mit dem genannten ersten Teil (31).

6. Fahrzeug nach Anspruch 5, wobei der erste Teil (31) einen Flansch (33) beinhaltet, der den zweiten Teil (32) mit dem genannten ersten Teil (31), der mit der Auflage (1) verbunden ist, durch eine drehbare Querverbindung (34) sichert.

7. Fahrzeug nach Anspruch 5, wobei der genannte erste Teil (31) und der genannte zweite Teil (32) durch eine drehbare Querverbindung (35) verbunden sind.

8. Fahrzeug nach den Ansprüchen 5 bis 7, wobei bei einem Frontalzusammenstoß der zweite Teil (32) so geführt wird, dass er im Wesentlichen horizontal bewegt wird.

9. Fahrzeug nach Ansprüchen 5 bis 8, wobei die zerbrechlichen Elemente eine Wand (50) zusammengeschlossen um die Auflage (1) umfassen.

10. Fahrzeug nach Anspruch 9, wobei die genannte Wand (50) den ersten Teil (31) sichert.

11. Fahrzeug nach einem der zuvor genannten Ansprüche, wobei die Erweiterung (8) einen Stift (12) beinhaltet und das genannte deformationsgeschützte quer verlaufende Element (9) einen Schlitz (13) enthält in den der genannte Stift (12) passt.

## Revendications

1. Véhicule avec une structure de support de pédale, ledit véhicule comportant un habitacle passager, une paroi (2) disposée sur la partie frontale dudit habitacle passager et un élément transversal résistant à la déformation (9); la structure de support de pédale comportant un élément de support (1) solidaire de la paroi (2), un dispositif de sécurité intermédiaire (3) relié audit élément de support (1), et au moins une pédale (6) qui tourne autour d'un axe (7), l'axe (7) étant relié au dispositif intermédiaire (3) et, en cas de collision frontale, ledit dispositif intermédiaire (3) déplacant l'axe (7) vers l'habitacle passager sous la force de l'élément transversal résistant à la déformation (9) sur ledit dispositif intermédiaire (3), **caractérisé en ce qu'**il comprend des éléments cassants (5;50) qui immobilisent ledit dispositif intermédiaire (3) par rapport à l'élément de support (1), et ce dispositif intermédiaire (3) incorpore une extension(8) en face de l'élément transversal résistant à la déformation (9), ledit élément transversal résistant à la déformation (9) stoppant l'avance de ladite extension (8) en cas de collision frontale, entraînant ainsi la rotation du dispositif intermédiaire (3) par rapport à l'élément de support (1).

2. Véhicule selon la revendication 1, dans lequel ledit dispositif intermédiaire (3) est constitué d'un balancier (30) qui incorpore l'extension (8), ledit balancier (30) étant relié à l'élément de support (1) par une union tournante transversale (4).

3. Véhicule selon la revendication 2, dans lequel lesdits éléments cassants comportent une union fixe (5) entre le balancier (30) et l'élément de support (1).

4. Véhicule selon la revendication 2, dans lequel lesdits éléments cassants présentent une paroi relié à l'élément de support (1).

5. Véhicule selon la revendication 1, dans lequel ledit dispositif intermédiaire (3) comprend un premier élément (31) avec l'extension (8) et un second élément (32) auquel est relié l'axe (7) de la pédale (6), ledit second élément (32) étant en contact avec ledit premier élément (31).

6. Véhicule selon la revendication 5, dans lequel ledit premier élément(31) incorpore un flasque (33) qui sécurise ledit second élément (32) sur le premier (31) relié à l'élément de support (1) par une union tournante transversale (34).

7. Véhicule selon la revendication 5, dans lequel ledit premier élément (31) et ledit second élément (32) sont reliés par une union tournante transversale (35).

8. Véhicule conforme à une quelconque des revendications 5 à 7, dans lequel, en cas de collision frontale, le second élément (32) est guidé de façon à se déplacer nettement à l'horizontale.

9. Véhicule conforme à une quelconque des revendications 5 à 8, dans lequel lesdits éléments cassants présentent une paroi (50) relié à l'élément de support (1).

10. Véhicule selon la revendication 9, dans lequel ladite paroi (50) sécurise le premier élément (31).

11. Véhicule conforme à une quelconque des revendications précédentes, dans lequel l'extension (8) comporte une clavette (12), et ledit élément transversal résistant à la déformation (9) comporte une rainure (13), ladite clavette (12) venant s'engager dans cette rainure (13).
